# EUROPEAN PATENT APPLICATION

(11) **EP 1 372 003 A1**
(43) Date of publication of application: **17.12.2003**
(21) Application number: 03076786.7
(22) Date of filing: 10.06.2003
(51) Int. Cl.: G02B 5/18, G02B 27/44, B23K 26/00

(54) **Method and apparatus for forming periodic structures**

(30) Priority: 11.06.2002 SG 200203432
(71) Applicant: Data Storage Institute, Singapore 117608 (SG)
(72) Inventor: An, Chengwu, Singapore 650113 (SG); Wu Dongjiang, Singapore 120731 (SG); Wang, Weijie, Singapore 640520 (SG); Hong, Minghui, Singapore 680288 (SG)
(74) Representative: Bannerman, David Gardner

(57) **Abstract**

A method and apparatus for directly forming periodic structures on a substrate (111) by laser irradiation comprises directing a linearly polarized laser beam (114) onto a first location of the substrate (111); irradiating the substrate (111) for a sustained duration using the linearly polarized laser beam (114) for melting the substrate (111) at the first location to induce a surface wave thereon; the melted substrate having a plurality of ridges (301a,302a,303a) corresponding to the wavelengths of the surface wave. The linearly polarized laser beam scans the substrate along a first path to propagate the surface wave on the substrate; and thereafter, substrate is cooled down following scanning of the linearly polarized laser for solidifying the plurality of ridges to form a first group of periodic structure on the substrate. Periodic structures formed according to the Invention may be optical gratings such as diffraction or reflective gratings.

## Description

### FIELD OF THE INVENTION

This invention relates to a method and apparatus for forming periodic structures on a substrate. In particular, it relates to a method and apparatus for forming diffraction gratings by laser irradiation.

### BACKGROUND OF THE INVENTION

Periodic structures are a number of parallel, closely spaced ridges and/or grooves formed on a substrate. It is desirable to form periodic structures in certain industrial applications. In one application, a periodic structure formed on glass substrates would be useful to produce optical gratings such as diffraction gratings or reflective gratings, which is a large number of parallel, closely spaced slits formed on a substrate. An optical grating may be used to separate light of different wavelengths with high resolution.

Diffraction gratings or reflective gratings may be conventionally formed by either machine work or by optical lithography. For example, US Patent 6,223,381 discloses a photo induced grating in oxynitride glass, in which a target is exposed under actinic radiation that is modulated by an interference technique to form a pattern of refractive index variations that functions as a reflective grating.

In European Patent Application EP 077475A1, a method for producing a diffraction grating of a spectroscope is provided. According to this method, a laser beam is irradiated onto a glass film which is deposited on a silicon crystal substrate to form ridges by causing the light irradiation portion of the glass film to expand, thereby forming a diffraction grating.

The above methods form gratings on an additional material or structure on a substrate, therefore are not suitable for forming diffraction gratings directly on a substrate.

### SUMMARY OF THE INVENTION

According to the present invention, a method for directly forming periodical structures on a substrate is provided. The method comprises directing a linearly polarized laser beam onto a first location of the substrate; irradiating the substrate for a sustained duration using the linearly polarized laser beam for melting the substrate at the first location to induce a surface wave thereon; the melted substrate having a plurality of ridges corresponding to the wavelengths of the surface wave. The linearly polarized laser beam scans the substrate along a first path to propagate the surface wave on the substrate; and thereafter, substrate is cooled down following scanning of the linearly polarized laser for solidifying the plurality of ridges to form a first group of periodic structure on the substrate.

It should be understood that the term "periodic structure" in this context refers to structures formed with parallel markings, ridges and/or grooves, for example, on a substrate with a regular period and a overall dimension of about 100 micrometer (µm) to at least a couple of millimeters, which may be suitable for use as an optical grating such as a diffraction grating or a reflective grating.

The term "sustained duration" refers to a time period used when the laser beam irradiates across every space point of the substrate.

In order to propagate the induced surface wave on the substrate, the laser beam is controlled to irradiate the substrate for the same sustained duration at any given location during the scanning process, so that the laser energy absorbed by the substrate at said location is substantially the same as any other locations. Result of which generates a surface wave with unique wavelength and amplitude on the substrate, and the surface wave is carried by the laser beam along the first path on the substrate.

Preferably, a plurality of subsequent laser scannings are effected on the substrate along subsequent paths to form corresponding subsequent groups of periodic structures.

Preferably, the plurality of subsequent paths are substantially parallel to each other and are parallel to the first path.

Preferably, first group of periodic structure and the subsequent groups of periodic structures are substantially aligned with each other and more preferably, the ridges of the first group of periodic structure and that of the subsequent groups of periodic structures respectively overlap with each other.

In one embodiment, the substrate is glass and the sustained duration is at least about 0,08 second.

Preferably, the scanning is effected along a first direction, which is substantially perpendicular to the polarization direction of the linearly polarized laser beam.

Alternatively, the scanning is effected along a first direction, which is substantially parallel to the polarization direction of the linearly polarized laser beam.

Preferably, the method further comprises, during the scanning process, air-blowing the substrate for cooling the substrate.

### BRIEF DESCRIPTION OF THE DRAWINGS

Fig. 1 is a schematic drawing of a system for forming-diffraction gratings onto a substrate according to a first embodiment of the present invention;
Fig. 2 is an enlarged view of a laser spot of the laser beam formed onto the substrate;
Figs. 3A - 3D are enlarged partially cross sectional views showing the process of forming periodic structures on a substrate by laser irradiation according to a first embodiment of the present invention;
Figs. 4A and 4B are enlarged partially top views showing a substrate with periodic structures formed thereon according to the process of Figs. 3A - 3D;
Fig. 5A and 5B are enlarged partially top views showing a substrate with periodic structures formed thereon according to a second embodiment of the present invention;
Fig. 6 is a flow chart showing the method for forming periodic structures according to the present invention;
Fig. 7A and 7B are microscopy photographs showing diffraction gratings formed on a substrate according to the first and the second embodiments of the present invention.
Fig. 8 is a microscopy photograph showing a diffraction grating with a lager dimension formed according the method shown in Fig. 4B.
Fig. 9 is a schematic drawing of a system for testing the diffraction grating formed according to the present invention;
Fig. 10 is a photograph taken by the system of Fig. 9 showing the diffraction grating pattern;
Fig. 11 is a microscopy photograph showing a diffraction grating formed on a substrate according to a third embodiment of the present invention;
Fig. 12 is a schematic drawing showing a diffraction grating formed on a substrate according to a forth embodiment of the present invention; and
Fig. 13 is a chart showing the experimental results of the normalized period change against the laser scanning speed.

### DETAILED DESCRIPTION OF THE PREFERRED EMBODIMENTS

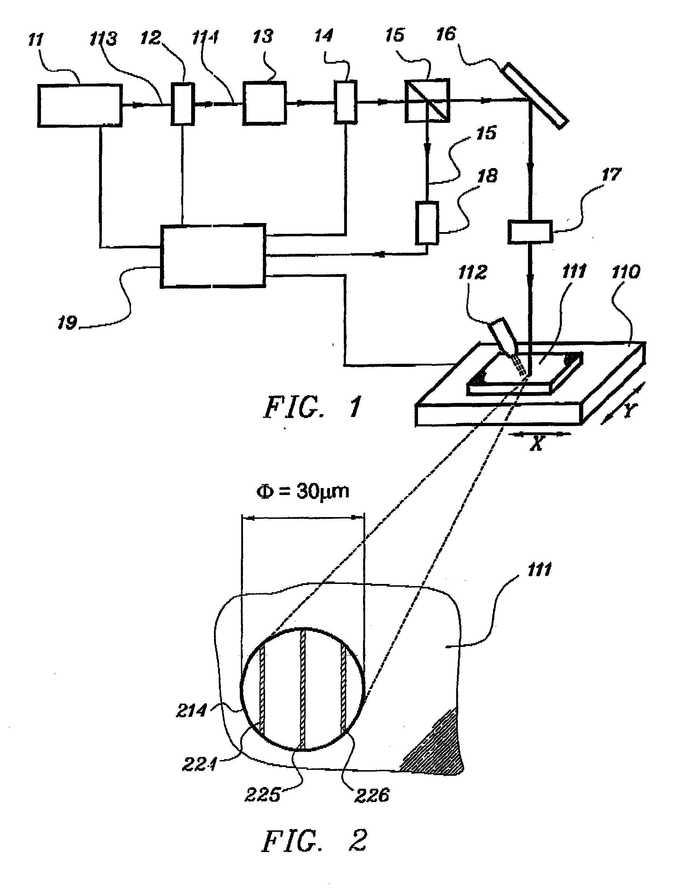

As shown in Fig. 1, a system for forming periodic structures on a substrate according to one embodiment of the present invention comprises a laser source 11, a laser beam polarizer 12, a beam expander 13, a beam attenuator 14, a sampler 15, a reflecting mirror 16, a laser power detector 18, a focusing unit 17, a computer 19, an X-Y state 110 and an air nozzle 112. The laser beam polarizer 12 is rotatable for adjusting the direction of the polarization. Mounted on and carried by the X-Y stage 110 is a substrate 111 on which the periodic structure is to be formed.

A laser beam 113 generated from the laser source 11 is directed into the polarizer 12 to form a linearly polarized laser beam 114, which is subsequently directed through the attenuator 14, the sampler 15, the minor 16, the focusing unit 17 onto the substrate 111. The substrate 111 is made of optical material such as glass, which is transparent to visible light and absorbs the laser used. The sampler 15 takes a sampling beam 115 into the power detector 18 for measuring and monitoring the laser power level together with the computer 19. A compressed air flow is directed through the air nozzle 112 onto the substrate 111 for cooling the substrate 111. The operation of the laser source 11, movement of the X-Y stage 110, adjustment of the polarizer 12 and the attenuator 14 may be centrally controlled by the computer 19.

When directed and focused onto the substrate 111, the polarized laser beam 114 will induce a surface wave thereon. Details of the formation of the surface wave will be discussed below. For ease of illustration, stripes 224, 225 and 226 represent the wave peaks of the induced surface wave under the coverage of a laser spot 214 as shown in Fig. 2. It should be appreciated that subject to the wavelength and the focusing adjustment of the laser beam, the size of the spot 214 may vary and it may cover either lesser or greater numbers of wave peaks.

In this embodiment, the laser used is a continuous wave CO₂ laser having a wavelength λ of about 10,6 µm and a power output of about 0.2W, and the laser beam 114 is focused onto the substrate with a spot having a diameter Φ of about 30 µm

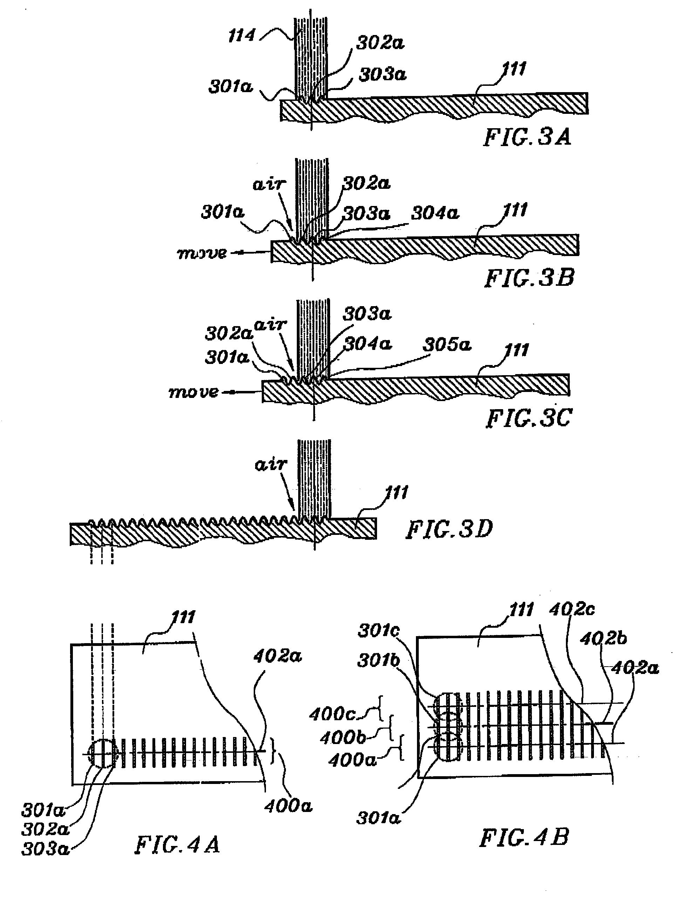

As illustrated in Figs. 3A - 3D, the linearly polarized laser beam 114 irradiates the substrate 111 at a first location (Fig. 3A) for a sustained duration until the laser energy absorbed by the first location of the substrate 111 reaches the melting threshold of the substrate. In this embodiment, the sustained duration is about 0.1 second before the substrate at the first location starts to melt.

Induced by the linearly polarized laser beam 114, a surface wave is formed on the melted material with a wavelength corresponding to that of the laser beam 114, which generates on the substrate surface three ridges 301a, 302a and 303a corresponding to the wave peaks 224, 225 and 226, respectively.

The substrate 111 is now moved by the X-Y stage 110 relative to the laser beam 114, which cause the laser beam 114 scanning on the substrate 111 along a first path 402a (Fig. 4A) substantially perpendicular ("perpendicular polarization") to the polarization direction of the laser beam 114. Subsequent locations on the substrate surface following the movement are melted by absorbing the laser energy, and the surface wave is continuously induced and carried by the laser beam 114 along the first path 402a. In this regard, the surface wave is propagated following the movement, which generates new ridges 304a (Fig. 3B) and 305a (Fig. 3C). The newly formed ridges during the process are referred to in this context as "leading ridges" with respect to their position relative to the laser beam.

In the meantime, the first ridge 301a is shifted away from the laser irradiation, therefore it absorbs no further laser energy. With the cooling down of the substrate 111, with or without the air blowing, the first ridge 301a is solidified on the substrate surface. The solidified ridges after the laser irradiation are referred to in this context as "trailing ridges" with respect to their position relative to the laser beam.

With further movement of the substrate 111, the leading ridges are continuously formed with the melting of the substrate surface and the propagation of the surface wave, and the trailing ridges are continuously solidified after the laser irradiation.

Once the laser beam 114 reaches the desired end location (Fig. 3D), the laser irradiation and the movement are terminated. At this point, a first group of ridges 301a, 302a, 303a, etc. have been formed on the substrate surface. Since the laser beam 114 has a unique wavelength and light spot dimension and scans on the substrate in a unique speed, the surface wave induced has also a unique wavelength and amplitude, therefore the pitches and the dimensions of the series of ridges 301a, 302a, 303a, etc. are substantially unique.

It can be seen that this group of ridges form a periodic structure 400a on the substrate 111, as shown in Fig. 4A.

The above process may be repeated along one or more subsequent paths 402b, 402c, etc to form corresponding groups of periodic structures 400b, 400c, etc. These subsequent paths 402b, 402c. etc. may be parallel to each other and further, the distances the ebetween may be adjusted such that the corresponding ridges 301a, 301b, 301c; 302a, 302b, 302c; and 303a, 303b, 303c may overlap respectively with each other so that to form a periodic structure with a larger dimension.

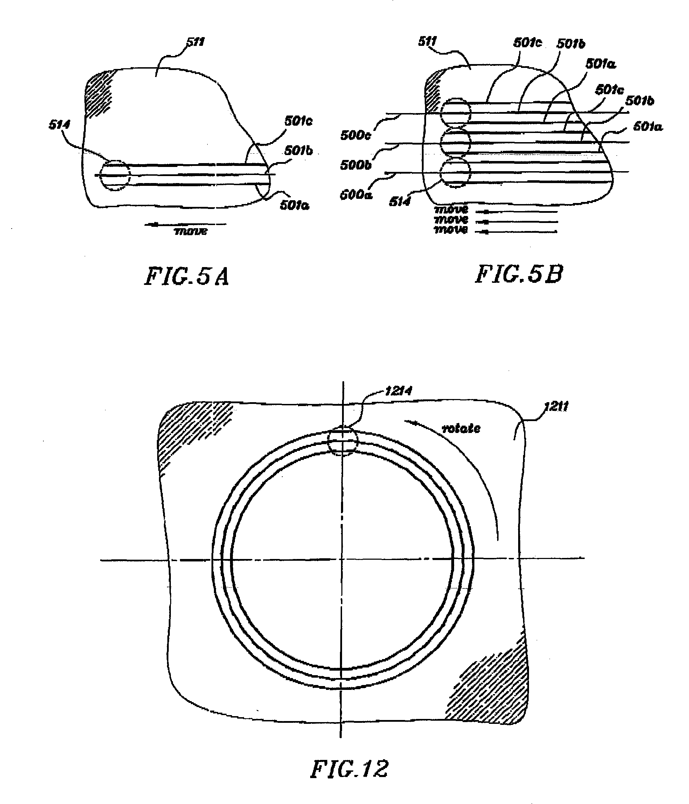

According to another embodiment of the present invention, the direction of polarization of the laser beam 514 is adjusted to be substantially parallel (parallel polarization) to the movement direction of the substrate 111. In a first travelling path, a first group of three ridges 501a, 501b and 501c may be formed parallel to the movement direction of the substrate 511, as shown in Fig. 5A. When the desired length of the ridges are formed along the first path, the laser beam 514 may be shifted from the first path 500a to the next path 500b and scan through the substrate along the second path 500b to form a second group of three ridges 502a, 502b and 502c next to the first group of three ridges 501a, 501b and 501c. Further scanning may be performed in the above manner along a third path 500c to form a third group of three ridges 503a, 503b and 503c. Following the mechanism illustrated above, it can be seen that periodic structures with a desired dimension may be formed on the substrate 511, which are substantially parallel to the movement direction of the substrate, as shown in Fig 5B.

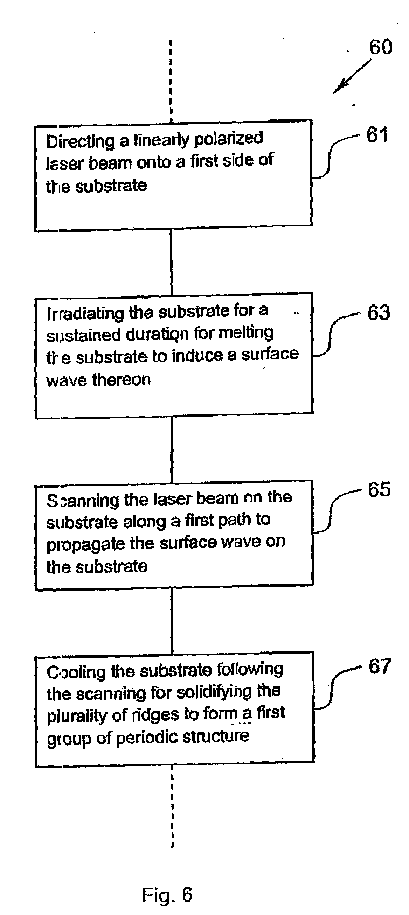

A method 60 of forming a periodic structure onto a substrate according to the present invention may be illustrated in Fig. 6. In a first block 61, a linearly polarized laser beam Is directed on to a first location of the substrate. In the next block 63, the linearly polarized laser irradiates the substrate for a sustained duration for melting the substrate at the first location to induce a surface wave thereon. The melted substrate is now formed with a plurality of ridges corresponding to the wavelength of the surface wave. In the next block 65, the laser beam scans the substrate along a first path to propagate the surface wave and in a subsequent block 67, the substrate is cooled so that the ridges can be solidified on the substrate surface to form a periodic structure.

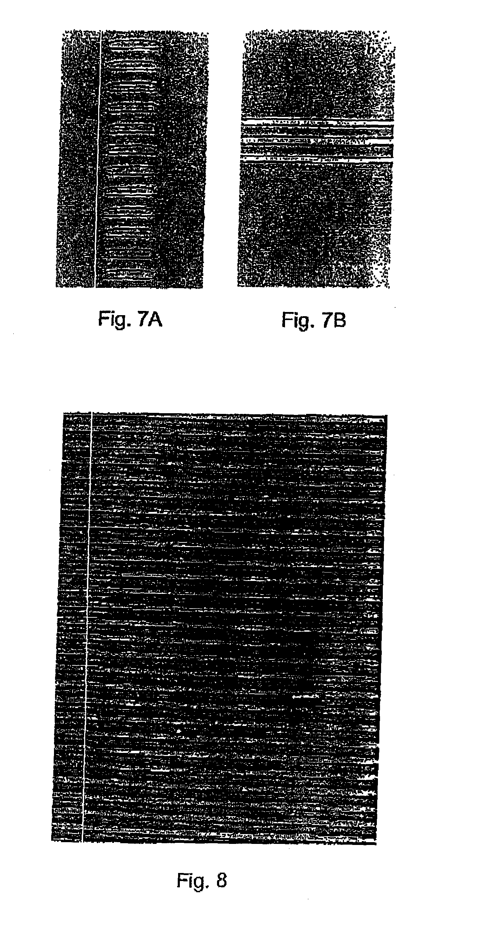

Figs. 7A and 7E are microscopy photographs showing the periodic structures formed on a glass substrate, corresponding to the process illustrate above with "perpendicular" and "parallel" polarizations, respectively. The pitch of these periodic structure is about 8 µm, and the width is about 30 - 50 µm, which corresponds to the dimension of the laser spot focused on the substrate surface.

Fig.8 is a microscopy photograph showing a sample with periodic structures formed thereon according to the first embodiment of the present invention, with multiple laser scannings. It can be seen that individual groups of small width ridges are overlapped and respectively aligned to form a larger periodic structure. The width of the overlapped ridges is about 200 µm. It should be appreciated that more scans may be effected to form a periodic structure with other desired dimensions.

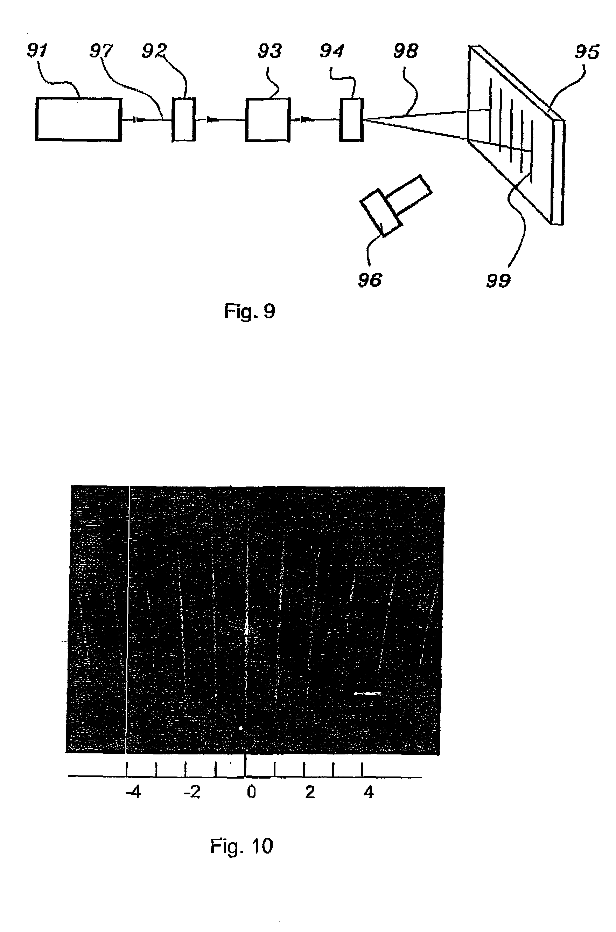

Fig. 9 is a schematic drawing of a system for testing the periodic structure formed according to the present invention A Helium-Neon (He-Ne) Laser source 91 generates a laser beam 97 which goes through a collimator 92, an aperture 93 into a sample 94. The sample 94 is a glass panel with periodic structures formed thereon according to the first embodiment of the present invention. An output laser beam 98 forms a diffraction pattern 99 on a screen 95, which is captured by a camera 96 and as shown in Fig. 10. Result of this test shows that the periodic structures formed according to the present invention is a diffraction grating. It should be appreciated by those skilled in the art that a reflective grating may also be formed by following the above method with an appropriate material, without departing from the basic principal of the present invention disclosed.

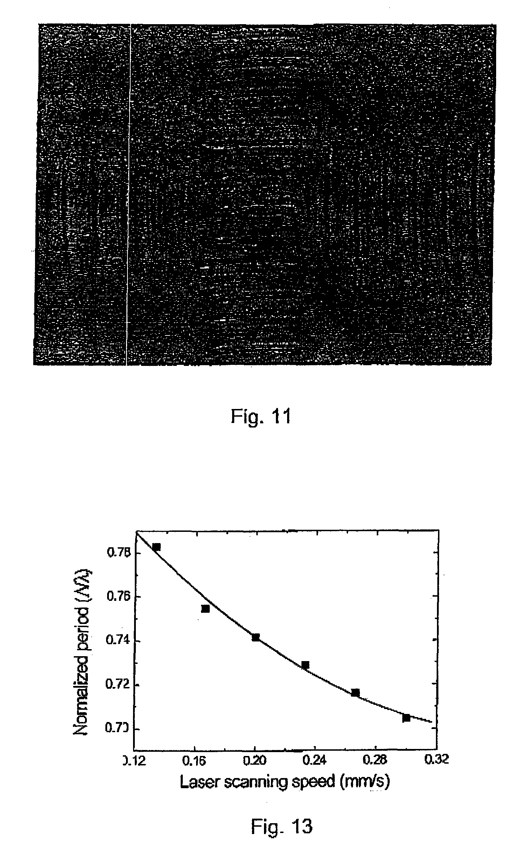

According to a further embodiment of the present invention, two cross scannings may be effected on a substrate, which generates a checkboard pattern of periodic structures on the substrate, as shown in Fig. 11.

According to another further embodiment of the present invention, the relative movement between a laser beam 1214 and a substrate 1211 may be effected along one or more circular paths. Results of which may generate circular diffraction gratings, as shown in Fig. 12.

In the above embodiments, one of the factors affecting the periodic structures is the laser irradiation dose, which may differ from different substrate materials. For example, the irradiation dose for a quartz substrate is about 3 times higher than that for a silicate glass substrate. For glass material, the laser irradiation dose is controlled to be no more than about 800 J/cm²- A dose with its level exceeding this limit may result in overmelting the substrate and destroying the ridges' structure therefore preventing anyno periodic structures to be formed.

Another factor affecting the periodic structures is the sustained duration of the laser irradiation on every spatial point in the scanning path. For a glass substrate irradiated by a 0.2W CO₂ laser, the sustained duration is about 0.1 second.

A further factor is the type of laser. A continuous wave laser such as a CO₂ laser with low power, or a high repetition rate laser with long pulse duration and low peak power is preferred for use in the present invention. Other suitable types of laser may be CO laser, Diode laser, high-order harmonic Nd:YAG Laser or Excimer laser, etc.

Fig. 13 is a chart showing The experimental results of the normalized period of the periodic structures' change against the laser scanning speed. The normalized period is defined as the period of the periodic structure Λ divided by the wavelength λ of the laser beam (Λ/λ). As illustrated in Fig. 13, as scanning speed increases, the normalized period decreases. Since the laser wavelength is a constant, the pitch of the periodic structure decreases with the increase of the laser scanning speed.

## Claims

1. A method for forming periodic structures on a substrate comprising
directing a linearly polarized laser beam onto a first location of the substrate;
irradiating the substrate for a sustained duration using the linearly polarized laser beam;
melting the substrate at the first location to induce a surface wave thereon; the melted substrate having a plurality of ridges corresponding to the wavelength of the surface wave;
scanning the linearly polarized laser beam on the substrate along a first path to propagate the surface wave on the substrate; and
cooling the substrate to solidify the plurality of ridges to form a first group of periodic structure on the substrate.

2. The method as claimed in claim 1, further comprising scanning the linearly polarized laser beam on the substrate along a plurality of subsequent paths to form a corresponding subsequent groups of periodic structures.

3. The method as claimed in claim 2, wherein the plurality of subsequent paths are substantially parallel to each other and are parallel to the first path.

4. The method as claimed in claim 3, wherein the first group of periodic structure and the subsequent groups of periodic structures are substantially aligned with each other.

5. The method as claimed in claim 4, wherein the ridges of the first group of periodic structure and the subsequent groups of periodic structures respectively overlap with each other.

6. The method as claimed in claim 1, wherein the substrate is transparent to visible light.

7. The method as claimed in claim 6, wherein the substrate is glass.

8. The method as claimed in claim 7, wherein the sustained duration is at least about 0.08 second.

9. The method as claimed in claim 1, wherein the linearly polarized laser beam is a continuous wave laser.

10. The method as claimed in claim 9, wherein the linearly polarized laser beam irradiates the substrate at an irradiatlon dose of no more than about 800 J/cm².

11. The method as claims in claim 1, wherein the linearly polarized laser beam is an Infrared (IR) laser.

12. The method as claims in claim 11, wherein the linearly polarized laser beam is a CO₂ laser.

13. The method as claimed in claim 1, wherein the scanning is effected along a first direction, which is substantially perpendicular to the polarization direction of the linearly polarized laser beam.

14. The method as claimed in claim 1, wherein the scanning is effected along a first direction which is substantially parallel to the polarization direction of the linearly polarized laser beam.

15. The method as claimed in claim 1, wherein the first path is a rectilinear track.

16. The method as claimed in claim 1, wherein the first path is a curvilinear track.

17. The method as claims in claim 1, further comprising air-blowing the substrate for cooling the substrate.

18. A method for forming periodic structures comprising
irradiating a substrate for a sustained duration using a linearly polarized laser beam;
melting the substrate at a first location to induce a surface wave thereon; the melted substrate having a plurality of ridges corresponding to the wavelength of the surface wave;
effecting relative movements between the substrate and the laser beam along a first path;
propagating the surface wave on the substrate; and
cooling the substrate to solidify the plurality of ridges to form a first group of periodic structure on the substrate.

19. The method as claimed in claim 18, wherein the substrate moves relative to the laser beam.

20. The method as claimed in claim 19, wherein the substrate moves for a plurality of trips for forming a plurality of groups of ridges.

21. The method as claimed in claim 20, wherein the plurality of trips offset from each other.

22. The method as claimed in claim 21, wherein the plurality of trips are parallel to each other.

23. The method as claimed in claim 22, wherein the offset is less than the length of the ridges.
